# EUROPÄISCHE PATENTSCHRIFT

(11) **EP 0 907 912 B1**
(45) Veröffentlichungstag und Bekanntmachung des Hinweises auf die Patenterteilung: **03.05.2000**
(21) Anmeldenummer: 97930299.9
(22) Anmeldetag: 03.06.1997
(51) Int. Cl.: G05B 19/042, G05B 9/03, G06F 11/16

(54) **SYNCHRONISATIONSVERFAHREN**
SYNCHRONISATION PROCESS
PROCEDE DE SYNCHRONISATION

(30) Priorität: 24.06.1996 DE 19625195
(43) Veröffentlichungstag der Anmeldung: 14.04.1999
(73) Patentinhaber: SIEMENS AKTIENGESELLSCHAFT, 80333 München (DE)
(72) Erfinder: BARTHEL, Herbert, D-91074 Herzogenaurach (DE); FUCHS, Heiner, D-91056 Erlangen (DE); GÖBEL, Alfons, D-91058 Erlangen (DE)
(86) Internationale Anmeldenummer: DE9701109
(87) Internationale Veröffentlichungsnummer: WO9750024

(56) Entgegenhaltungen:
- EP-A- 0 316 087
- EP-A- 0 394 514
- EP-A- 0 497 147
- EP-A- 0 616 274
- DE-A- 4 104 114

## Beschreibung

Die vorliegende Erfindung betrifft ein Synchronisationsverfahren für ein redundant aus mindestens zwei Teilsystemen aufgebautes Automatisierungssystem, bei dem die mindestens zwei Teilsysteme mindestens einen Prozesssor aufweisen, über Kommunikationsmittel miteinander gekoppelt sind, zur Steuerung eines Prozesses funktional identische Folgen von Maschinenbefehlen ausführen und sich von Zeit zu Zeit über das Kommunikationsmittel miteinander synchronisieren.

Synchronisationsverfahren für Automatisierungssysteme sind allgemein bekannt. Bei dem Verfahren gemäß der EP-A-0 497 147 synchronisieren sich die Teilsysteme eines aus zwei Teilsystemen aufgebauten Automatisierungssystems spätestens nach Ablauf einer vom Benutzer vorwählbaren Zeit. Ähnliches gilt für den Gegenstand der EP-A-0 616 274. Hier erfolgt die Synchronisation in Abhängigkeit von der tatsächlichen Laufzeit einer Folge von Maschinenbefehlen. Dazu ist sowohl die Kenntnis der Laufzeiten der Befehle des Anwenderprogrammes sowie ein permanentes Aufaddieren dieser Laufzeiten erforderlich. Die bekannten Verfahren sind insofern noch nicht optimal, als unnötig viel Zeit für die Synchronisation verbraucht wird.

Die Aufgabe der vorliegenden Erfindung besteht folglich darin, ein Synchronisationsverfahren mit minimalen Aufwand für ein aus mindestens zwei Teilsystemen aufgebautes Automatisierungssystem anzugeben. Dabei soll das Synchronisationsverfahren unabhängig vom Vorhandensein einer speziellen Hardware sein. Das erfindungsgemäße Synchronisationsverfahren soll dabei die Rechenleistung des Automatisierungssystems in so geringem Maße wie möglich beeinträchtigen.

Die Aufgabe wird durch ein Verfahren gemäß der im kennzeichnenden Teil des Patentanspruchs 1 angegebenen Merkmale gelöst.

Das Synchronisationsverfahren basiert auf einem Zähler für jedes der Teilsysteme - nachfolgend Synchronisationszähler genannt -, der durch Inkrementierungsanweisungen inkrementiert, d.h. um eins erhöht wird. Das Inkrementieren stellt für einen Prozessor eine besonders einfache Aufgabe dar, die in Einzelfällen auch innerhalb nur eines einzigen Taktzyklusses und daher besonders schnell erfolgt.

Eine Synchronisation wird zumindest dann durchgeführt, wenn eines der mindestens zwei Teilsysteme - nachfolgend das alamierte Teilsystem genannt - ein Sonderereignis, z.B. einen Interrupt oder einen Alarm registriert. In diesem Fall übermittelt das alarmierte Teilsystem dem mindestens einen anderen Teilsystem den aktuellen Wert seines Synchronisationszählers. Durch diese Übermittlung ist das mindestens eine andere Teilsystem zumindest informiert, daß ein Sonderereignis aufgetreten ist. Das mindestens eine andere Teilsystem übermittelt seinerseits jedem anderen Teilsystem den aktuellen Wert seines Synchronisationszählers. Jedes der Teilsysteme ist damit über den aktuellen Wert des eigenen Synchronisationszählers sowie über den Wert des Synchronisationszählers des mindestens einen anderen Teilsystemes informiert.

Zum Zeitpunkt des Auftretens des Sonderereignisses kann eines der Teilsysteme dem mindestens einen anderen Teilsystem bei der Ausführung der Folge von Maschinenbefehlen vorauseilen. Ist dies der Fall, so ist es darüber hinaus möglich, daß das vorauseilende Teilsystem bereits eine größere Anzahl von Inkrementierungsanweisungen ausgeführt hat, so daß die Werte der Synchronisationszähler der Teilsysteme differieren.

Jedes Teilsystem ermittelt aus dem Wert des eigenen Synchronisationszählers und aus dem Wert des Synchronisationszählers des mindestens einen anderen Teilsystemes den aktuell größten Wert. Der Wert des Synchronisationszählers, den alle Teilsysteme durch weiteres Ausführen der Folge von Maschinenbefehlen gemeinsam erreichen können, ist der um eins erhöhte - also inkrementierte - größte Wert des Synchronisationszählers. Daher wird in jedem Teilsystem der größte Wert der Synchronisationszähler aller Teilsysteme inkrementiert. Dieser für alle Teilsysteme gleiche Wert wird nachfolgend Synchronisationszähler-Zielwert genannt. Dieser kann selbstverständlich alternativ auch bestimmt werden, indem zunächst die Werte der Synchronisationszähler inkrementiert werden und daraufhin der Synchronisationszähler-Zielwert als deren Maximalwert ermittelt wird.

Die Teilsysteme unterbrechen die Ausführung der Folge von Maschinenbefehlen beim Erreichen der Position derjenigen Inkrementierungsanweisung - nachfolgend Synchronisationsposition genannt - bei der die Werte der jeweiligen Synchronisationszähler den Synchronisationszähler-Zielwert erreichen. Da die Inkrementierungsanweisungen an miteinander korrespondierenden Stellen der funktional identischen Folgen von Maschinenbefehlen auftreten, eignen sich die Inkrementierungsanweisungen folglich besonders gut als potentielle Synchronisationsposition.

Das Erreichen einer solchen Synchronisationsposition kann wiederum besonders einfach durch Vergleich des Wertes des jeweiligen Synchronisationszählers mit dem Synchronisationszähler-Zielwert ermittelt werden. Das Synchronisationsverfahren basiert damit im wesentlichen auf Inkrementierungs- bzw. Vergleichoperationen, die für einen Prozessor besonders schnell und effizient durchführbar sind.

Da beide Teilsysteme ihre Synchronisationsposition zu unterschiedlichen Zeitpunkten erreichen können, signalisiert jedes Teilsystem dem mindestens einen anderen Teilsystem mit einem Synchronisationssignal das Erreichen der Synchronisationsposition. Jedes Teilsystem wartet daraufhin auf den Eingang des Synchronisationssignals von dem mindestens einen anderen Teilsystem, wodurch dieses signalisiert, daß es seinerseits die Synchronisationsposition erreicht hat. Im Falle von mehr als einem anderen Teilsystem wartet jedes Teilsystem auf den Eingang der Synchronisationssignale von allen anderen Teilsystemen, so daß jedes Teilsystem weitere Aktionen erst dann durchführt, wenn alle Teilsysteme die Synchronisationsposition erreicht haben. Es sind jedoch gleichfalls auch Anwendungsfälle denkbar, bei denen bei Erreichen der Synchronisationsposition kein Synchronisationssignal ausgetauscht wird.

Jedes Teilsystem ermittelt nach Erreichen der Synchronisationsposition und nach Registrieren des Synchronisationssignals von dem mindestens einen anderen Teilsystem eine für das Sonderereignis spezifische Reaktion und führt diese aus. Diese Reaktion ist eine für das Sonderereignis spezifische Folge von Maschinenbefehlen. Danach setzt jedes Teilsystem die Ausführung derjenigen Folge von Maschinenbefehlen fort, deren Ausführung beim Erreichen der Synchronisationsposition aufgrund der Synchronisation sowie aufgrund der Reaktion auf das Sonderereignis zurückgestellt wurde.

Das alarmierte Teilsystem übermittelt dem mindestens einen anderen Teilsystem das Sonderereignis frühestens unmittelbar nach dem Registrieren des Sonderereignisses, z.B. in Verbindung mit der Übermittlung des aktuellen Wertes des Synchronisationszählers, spätestens jedoch in Zusammenhang mit dem Synchronisationssignal.

Es gibt auch Fälle, bei denen für die Ausführung der für das Sonderereignis spezifischen Reaktion das Austauschen bzw. das Warten auf das Synchronisationssignal nicht erfolgt. In einem solchen Fall wird bei Erreichen der Synchronisationisposition die sonderereignis-spezifische Reaktion unmittelbar ausgeführt. Es erfolgt dann zwar keine zeitliche Synchronisation, dennoch ist durch das erfindungsgemäße Verfahren sichergestellt, daß die sonderereignis-spezifische Reaktion zwar nicht zeitgleich, doch aber an funktional identischen Positionen innerhalb der Folge von Maschinenbefehlen des jeweiligen Teilsystems ausgeführt wird. Auf diese Weise ist die gewünschte Synchronisierung sichergestellt, da die Synchronisationspositionen an miteinander korrespondierenden Stellen der Folgen von funktional identischen Maschinenbefehlen angeordnet sind.

Das Erreichen der Synchronisationsposition ist besonders effizient möglich, wenn gemäß Anspruch 3 die Adresse eines jeden Maschinenbefehls der Folge von Maschinenbefehlen, insbesondere die Adresse des aktuell auszuführenden Maschinenbefehls sowie die Adresse desjenigen Maschinenbefehls, der mit der Synchronisationsposition korrespondiert, ermittelbar ist.

Dadurch ist es möglich, daß beim Ausführen der Folge von Maschinenbefehlen - zumindest nach der Registrierung des Sonderereignisses durch das alarmierte Teilsystem - stets die Adresse des aktuell auszuführenden Maschinenbefehls mit der Adresse desjenigen Maschinenbefehls, der mit der Synchronisationsposition korrespondiert, verglichen wird. Wird eine Übereinstimmung der beiden zu vergleichenden Adressen festgestellt, so ist die Synchronisationsposition erreicht. Das Ausführen der Folge von Maschinenbefehlen ist auf diese Weise genau bei Erreichen der Synchronisationsposition unterbrechbar.

Für den Fall, daß die Synchronisationsposition innerhalb einer bedingt oder unbedingt zu wiederholenden Teilfolge der Folge von Maschinenbefehlen liegt, werden die einzelnen Maschinenbefehle mehrfach abgearbeitet. Die Position einer Inkrementierungsanweisung wird jedoch erst dann zur Synchronisationsposition, wenn mit dem Ausführen der Inkrementierungsanwweisung der Synchronisationszähler den Synchronisationszähler-Zielwert erreicht. Daher kann es im Falle von Schleifen vorkommen, daß eine Inkrementierungsanweisung im Rahmen der Schleife mehrfach abgearbeitet wird, jedoch erst nach einer gewissen Anzahl von Abarbeitungen zur Synchronisationsposition wird. In diesem Fall ist also das Ermitteln der Adresse der Inkrementierungsanweisung nicht ausreichend. In diesem Falle ist die Synchronisationsposition erst dann erreicht, wenn die Adresse des aktuell auszuführenden Maschinenbefehls mit der Adresse desjenigen Maschinenbefehls, der mit der potentiellen Synchronisationsposition korrespondiert, übereinstimmt und gleichzeitig der Synchronisationszähler mit dem Synchronisationszählerzielwert übereinstimmt.

Ist - wie oben beschrieben - die Adresse eines jeden Maschinenbefehls ermittelbar, so ist darüber hinaus mit der Synchronisationsposition ein "Break-Point" verbindbar, so daß die Ausführung der Folge von Maschinenbefehlen exakt an der Synchronisationsposition unterbrochen wird. Die Überprüfung, ob die Synchronisationsposition - also die mit dem Break-Point verbundene Adresse - erreicht ist, übernimmt der Prozessor dann direkt. Üblicherweise - Prozessoren der Fa. INTEL, z.B. i80386, i80486, Pentium, etc. - wird bei Erreichen der mit dem Break-Point verbundenen Adresse ein Interrupt ausgelöst, dessen Eintreffen eindeutig das Erreichen der fraglichen Adresse anzeigt.

Ist der Prozessor in einem Einzelschrittmodus - also im "Single-Step-Mode" - betreibbar, so ist es alternativ auch möglich, beim Ausführen der Folge von Maschinenbefehlen - zumindest nachdem das alamierte Teilsystem ein Sonderereignis registriert hat - stets die Adresse des aktuell ausgeführten Maschinenbefehls mit der Adresse der Synchronisationsposition zu vergleichen. Wird eine Übereinstimmung festgestellt, so ist die Synchronisationsposition erreicht und die Abarbeitung der Einzelbefehle der Folge von Maschinenbefehlen wird unterbrochen.

Eine weitere effiziente Möglichkeit für das Erreichen der Synchronisationsposition besteht gemäß der Merkmale des Anspruchs 4 darin, daß beim Ausführen der Folge von Maschinenbefehlen - zumindest nach der Registrierung des Sonderereignisses durch das alarmierte Teilsystem - stets der Wert des Synchronisationszählers mit dem Synchronisationszähler-Zielwert verglichen wird und daß das Ausführen der Folge von Maschinenbefehlen unterbrochen wird, wenn der Wert des Synchronisationszählers den Synchronisationszähler-Zielwert erreicht. Dazu wird eine erste Speicherstelle und eine zweite Speicherstelle ermittelt, wobei in der ersten Speicherstelle der Wert des Synchronisationszählers gespeichert ist und in der zweiten Speicherstelle der Synchronisationszähler-Zielwert gespeichert ist. Bei gebräuchlichen Prozessoren, insbesondere den genannten Prozessoren der Fa. INTEL, ist der Prozessor so programmierbar, daß das Ausführen der Folge von Maschinenbefehlen unterbrochen wird, sobald der Inhalt der ersten Speicherstelle mit dem Inhalt der zweiten Speicherstelle übereinstimmt. Diese spezielle Funktionalität des Prozessors wurde bisher vor allem für Fehlersuchprogramme - sogenannte Debugger - ausgenutzt. Sie kann selbstverständlich auch zum Erreichen der Synchronisationsposition ausgenutzt werden.

Die Positionen der Inkrementierungsanweisungen innerhalb der Folge von Maschinenbefehlen können gemäß unterschiedlicher Strategien festgelegt werden. Wenn die Folgen von Maschinenbefehlen aus Befehlssequenzen einer Programmiersprache erzeugt werden, ist es vorteilhaft, die Inkrementierungsanweisungen bereits während der Umsetzung der Befehlssequenzen in die Folgen von Maschinenbefehlen einzufügen. Zum Umfang der Erfindung gehört jedoch auch, die Inkrementierungsanweisungen nach der Erzeugung der Folge von Maschinenbefehlen jedoch vor deren Ausführung mittels einer Relocierung in diese einzufügen.

Handelt es sich bei den Befehlssequenzen um Befehlssequenzen einer Programmiersprache, bei der zusammengehörige Befehlssequenzen in einem Block zusammengefaßt sind, werden die Inkrementierungsanweisungen in die Folge von Maschinenbefehlen jeweils an zumindest einer der Grenzen des Blocks eingefügt. Beispiele für solche Programmiersprachen sind sämtliche "strukturierten" Programmiersprachen - wie z.B. Pascal, PEARL, C/C++, etc. - die jeweils Sprachmittel für die Vereinbarung eines Blockes aufweisen, wobei ferner spezielle Sprachmittel auch implizit einen Block festlegen.

Stets sind Inkrementierungsanweisungen - wie auch im Stand der Technik gemäß der EP-A-0 497 147 - in Zusammenhang mit sämtlichen Sprungbefehlen, z.B. bedingten und unbedingten Sprungbefehlen, einzufügen. Unter Sprungbefehlen werden dabei sämtliche Befehle und damit auch Anweisungen aus sogenannten Hochsprachen verstanden, die auf der dem Prozessor direkt verständlichen Sprachebene zu einem bedingten oder unbedingten Sprung führen. Dies ist erforderlich, weil durch einen Sprung eventuell Inkrementierungsanweisungen übersprungen werden. Insbesondere wäre es denkbar, daß durch einen Sprung über einen längeren, möglicherweise sogar über einen unbegrenzten Zeitraum nur Maschinenbefehle zwischen zwei Inkrementierungsanweisungen ausgeführt würden, so daß während dieses Zeitraumes keine Inkrementierungsanweisungen ausgeführt würden. In diesem Falle würden entsprechend keine potentiellen Synchronisationspositionen erreicht werden, so daß die Synchronisation nicht durchführbar wäre. Daher werden die Inkrementierungsanweisungen häufig, jedoch nicht notwendigerweise, vor einem solchen Sprungbefehl eingefügt.

Im Falle von Aufrufen von sogenannten Unterprogrammen ist es vorteilhaft, wenn die Inkrementierungsanweisungen innerhalb des Unterprogramms, also am Anfang des Unterprogramms und am Ende des Unterprogramms eingefügt werden. Damit läßt sich vorteilhafterweise das Einfügen der Inkrementierungsanweisungen in die Folgen von Maschinenbefehlen deutlich vereinfachen, da der Aufruf eines Unterprogramms nicht immer eindeutig erkennbar ist, wohl aber der Start und das Ende eines Unterprogramms. Exemplarisch seien hier für die Assembler-Programmiersprache die CALL- und die RET-Anweisung genannt, die jeweils einen Sprung in ein Unterprogramm bzw. einen Rücksprung aus einem Unterprogramm auslösen.

Im Falle von speicherprogrammierbaren Steuerungen, deren spezielle Programmiersprachen üblicherweise keine Sprachmittel für eine block-orientierte Strukturierung anbieten, sind die Inkrementierungsanweisungen stets vor Sprungbefehlen einzufügen. Speziell im Falle von speicherprogrammierbaren Steuerungen erfolgt eine Strukturierung der Folge von Maschinenbefehlen häufig mittels sogenannter "Bausteine". Damit ist ein Baustein durchaus als spezielle Ausprägung eines Blockes anzusehen. Da die bei der Ausführung der Folge von Maschinenbefehlen einer speicherprogrammierbaren Steuerung erforderlich werdenden Bausteinwechsel mit Hilfe von Sprungbefehlen realisiert sind, führt auch hier das Einfügen von Inkrementierungsanweisungen vor einem Sprungbefehl zu dem gewünschten Ergebnis. Gleiches gilt in analoger Weise auch für nicht oder in nur geringem Maße strukturierte Programmiersprachen, wie z.B. Assembler oder BASIC.

Weiterhin können die Inkrementierungsanweisungen auch nach einer festen, insbesondere vom Anwender vorgebbaren Anzahl von Einzelbefehlen der Folge von Maschinenbefehlen in die Folge von Maschinenbefehlen eingefügt werden. Eine auf diese Weise vorgegebene Abfolge von Inkrementierungsanweisungen hat den Vorteil, daß die mittlere Zeitspanne zwischen dem Auftreten zweier Inkrementierungsanweisungen stets in etwa gleich bleibt. Der Zeitraum zwischen dem Auftreten zweier Inkrementierungsanweisungen wird durch die Summe der Laufzeiten der zwischen den Inkrementierungsanweisungen auszuführenden Einzelbefehle festgelegt.

Sind die mit den Inkrementierungsanweisungen korrespondierenden potentiellen Synchronisationspositionen in tatsächlich äquidistanten Zeitabständen gewünscht, so wird während der Umsetzung der Befehlssequenzen der Programmiersprache in die Folge von Maschinenbefehlen die Laufzeit eines jeden Einzelbefehls ermittelt und die Laufzeit einer Folge von Einzelbefehlen durch Aufaddieren der Laufzeiten der einzelnen Einzelbefehle ermittelt. Beim Erreichen einer bestimmten, insbesondere vom Anwender vorgebbaren Laufzeit wird in die Folge von Maschinenbefehlen eine Inkrementierungsanweisung eingefügt. Nach einer Inkrementierungsanweisung beginnt das Aufaddieren der Laufzeiten der einzelnen Befehle wieder bei Null. Stets ist jedoch, aus den oben bereits genannten Gründen, ein Einfügen von Inkrementierungsanweisungen vor Sprungbefehlen erforderlich. Die Inkrementierungsanweisung vor einem Sprungbefehl kann zusätzlich zu den Einfügungen nach dem festen Laufzeit-/Abstandsraster erfolgen. Alternativ ist es jedoch möglich, daß nach einer Inkrementierungsanweisung, die vor einem Sprungbefehl eingefügt ist, die Laufzeit- bzw. Abstandszählung bei Null beginnt.

Weiterhin können die Inkrementierungsanweisungen auch in die Folge von Maschinenbefehlen bzw. in die Folge von Befehlssequenzen - nachfolgend Quellfolge bzw. Quellsequenz genannt - eingefügt werden, indem die Quellfolge bzw. die Quellsequenz hinsichtlich bestimmter Maschinenbefehle bzw. bestimmter Befehlssequenzen, insbesondere hinsichtlich bestimmter Teilfolgen der Folgen von Maschinenbefehlen bzw. bestimmter Teilfolgen von Befehlssequenzen - nachfolgend Suchfolge bzw. Suchsequenz genannt -, untersucht wird.

Wenn die Suchfolge bzw. die Suchsequenz innerhalb der Quellfolge bzw. der Quellsequenz erkannt wird, ist es möglich, daß die Inkrementierungsanweisungen der Suchfolge bzw. der Suchsequenz vorangestellt oder angefügt werden. Die Suchfolge bzw. die Suchsequenz ist die jeweilige Ausprägung derjenigen Elemente der Quellfolge bzw. der Quellsequenz, denen gemäß der obigen Ausführungen eine Inkrementierungsanweisung zuzuordnen ist - also zumindest Blockgrenzen und/oder Sprungbefehle.

Gemäß einer speziellen Realisierung erfolgt das Einfügen der Inkrementierungsanweisung mit Hilfe eines speziellen Compilers. Das Umsetzungsverfahren des speziellen Compilers unterscheidet sich von dem eines Standard-Compilers dadurch, daß diejenigen Sprachmittel, die z.B. einen Block oder einen Sprungbefehl definieren, erkannt werden und in die zugehörigen Maschinenbefehle sowie zusätzlich in die Inkrementierungsanweisungen übersetzt werden.

Als Alternative bietet sich ein sogenannter "Pre-Prozessor" an. Mit Hilfe des Pre-Prozessors ist eine Vor-Verarbeitung der Befehlssequenzen einer Programmiersprache möglich. Unter Zuhilfenahme einer speziellen - einem Programmierer prinzipiell bekannten - Syntax kann ein solcher Pre-Prozessor veranlaßt werden, bestimmte Sprachmittel einer Programmiersprache, z.B. solche Sprachmittel, die einen Block einleiten, auszutauschen gegen ein Sprachmittel, das einen solchen Block einleitet sowie ein weiteres Sprachmittel, mit dem die Inkrementierungsanweisung ausgelöst wird.

Wünschenswert ist jedoch, daß das Einfügen der Inkrementierungsanweisungen in die Folge von Maschinenbefehlen in für den Benutzer transparenter Weise erfolgt. Die oben beschriebenen Anweisungen an den Pre-Prozessor sind für den Anwender erkennbar und damit manipulierbar. Eine Manipulation jedoch könnte eventuell zu Fehlern bei der Synchronisation und/oder zu Fehlern im erzeugten Programm selbst führen. Deshalb besteht eine weitere vorteilhafte Alternative für das Einfügen der Inkrementierungsanweisungen in die Folge der Befehlssequenzen darin, daß anstelle des Pre-Prozessors ein spezieller Pre-Prozessor zum Einsatz kommt, der unabhängig von eventuell weiteren anweisungsgemäßen Austauschungen zumindest diejenigen Befehlssequenzen, denen gemäß der obigen Ausführung eine Inkrementierungsanweisung zuzuordnen ist, in eben diese Befehlssequenzen sowie die Inkrementierungsanweisung umsetzt.

Über die genannten Alternativen zum Einfügen der Inkrementierungsanweisungen, die vom Anwender im wesentlichen nicht beeinflussbar sind, ist es weiterhin möglich, daß der Anwender selbst die Inkrementierungsanweisungen in die Folge von Maschinenbefehlen oder in die Folge von Befehlssequenzen einfügt.

Weitere Vorteile und Einzelheiten ergeben sich aus der nachfolgenden Beschreibung eines Ausführungsbeispiels. Dabei zeigen
- FIG 1: ein Blockschaltbild eines Automatisierungssystems,
- FIG 2: das Prinzip des Synchronisationsverfahrens,
- FIG 3: ein Flußdiagramm des Synchronisationsverfahrens,
- FIG 4: das Prinzip des Einfügeverfahrens,
- FIG 5 und FIG 6: ein Flußdiagramm des Einfügeverfahrens.

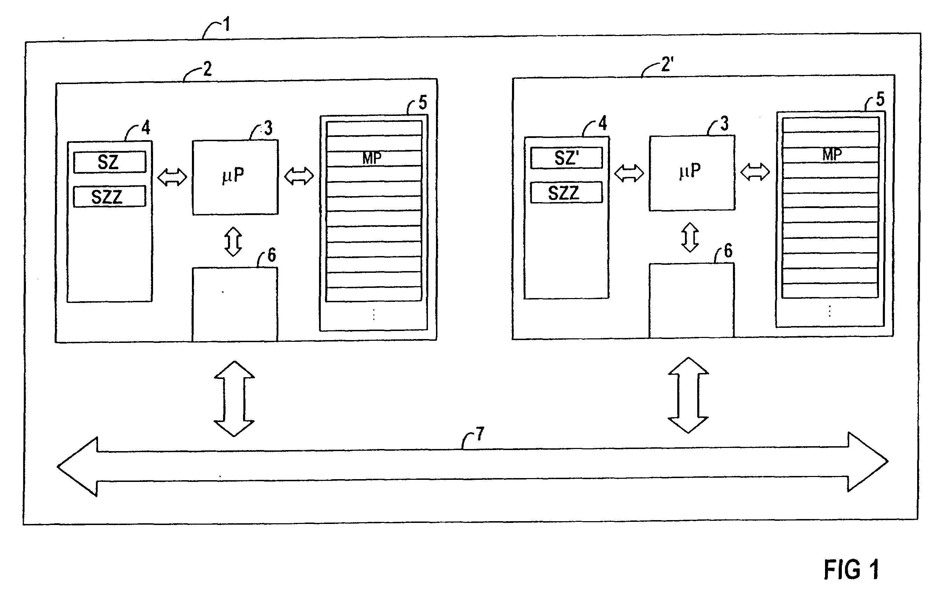

Gemäß FIG 1 besteht das redundante Automatisierungssystem 1 aus mindestens zwei Teilsystemen 2,2', die zur Steuerung und Führung eines nicht dargestellten technischen Prozesses mit dem technischen Prozeß verbindbar sind. Jedes Teilsystem 2,2' weist einen Prozessor 3, eine Datenspeichereinheit 4, eine Befehlsfolgespeichereinheit 5 sowie mindestens ein Kommunikationsmittel 6 auf. Dabei sind die Datenspeichereinheit 4 und die Befehlsfolgespeichereinheit 5 nicht notwendigerweise getrennte Einheiten des redundanten Automatisierungssystems 1.

Die mindestens zwei Teilsysteme 2,2' kommunizieren über die Kommunikationsmittel 6 und über einen Bus 7 miteinander bzw. mit dem nicht dargestellten technischen Prozeß.

In der Datenspeichereinheit 4 ist zumindest der Wert des Synchronisationszählers SZ, SZ' sowie der Synchronisationszähler-Zielwert SZZ gespeichert. In der Befehlsfolgespeichereinheit 5 ist zumindest die Folge von Maschinenbefehlen MP - gespeichert. Die Folge von Maschinenbefehlen MP ist für die zwei Teilsysteme 2,2' zumindest funktional identisch. Zur Steuerung des nicht dargestellten technischen Prozesses führt der Prozessor 3 der Teilsysteme 2,2' die Folge der Maschinenbefehle MP der Befehlsfolgespeichereinheit 5 aus.

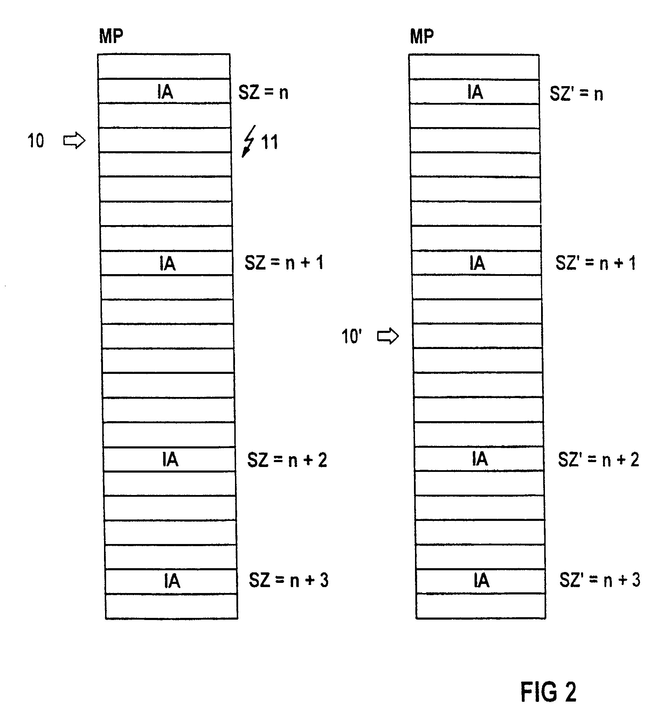

In FIG 2 sind die Folgen der Maschinenbefehle MP für die mindestens zwei Teilsysteme 2,2' dargestellt. Die Folge von Maschinenbefehlen MP auf der linken Seite sei dabei die Folge von Maschinenbefehlen MP für das Teilsystem 2, die Folge von Maschinenbefehlen MP auf der rechten Seite sei entsprechend die Folge von Maschinenbefehlen MP für das Teilsystem 2'.

Gemäß FIG 2 sind in die Folgen von Maschinenbefehlen MP Inkrementierungsanweisungen IA eingefügt. Mit Hilfe der Inkrementierungsanweisungen IA wird der Synchronisationszähler SZ, SZ' des jeweiligen Teilsystemes 2,2' inkrementiert, d.h. um 1 erhöht. Die mit dem Pfeil 10, 10' bezeichneten Positionen innerhalb der Folge von Maschinenbefehlen MP bezeichnen jeweils denjenigen Maschinenbefehl, der zum Zeitpunkt des Auftretens des Sonderereignisses 11 aktuell ausgeführt wird. Wie man aus FIG 2 weiterhin erkennt, registriert zumindest eines der Teilsysteme 2,2' das Sonderereignis 11.

Gemäß FIG 2 führen zu diesem Zeitpunkt die Teilsysteme 2,2' unterschiedliche Maschinenbefehle der Folge von Maschinenbefehlen MP aus. Eine Behandlung des Sonderereignisses 11 zu diesem Zeitpunkt könnte unter Umständen zu inkonsistenten Daten der Teilsysteme 2,2' des Automatisierungssystems 1 führen. Daher ist vor Behandlung des Sonderereignisses 11 eine Synchronisation der Teilsysteme 2,2' erforderlich. Für das Teilsystem 2 hat der Synchronisationszähler SZ zum Zeitpunkt des Auftretens des Sonderereignisses 11 den Wert n. Für das Teilsystem 2' hat der Synchronisationszähler SZ' zum Zeitpunkt des Auftretens des Sonderereignisses bereits den Wert n+1.

Zur Synchronisation muß dasjenige Teilsystem 2,2', das dem mindestens einen anderen Teilsystem 2,2' bei der Ausführung der Folge von Maschinenbefehlen MP vorauseilt, die Ausführung der Folge von Maschinenbefehlen MP unterbrechen, solange bis auch das andere Teilsystem 2,2' die korrespondierende Position innerhalb der funktional identischen Folgen von Maschinenbefehlen MP erreicht hat.

Unmittelbar korrespondierende Positionen innerhalb der Folge von Maschinenbefehlen MP sind jeweils die Inkrementierungs-anweisungen IA. Bei dem in FIG 2 dargestellten Zustand hat der Synchronisationszähler SZ' den Wert n+1. Der Synchronisationszähler SZ hat den Wert n. Würde die Ausführung der Folge von Maschinenbefehlen MP des Teilsystemes 2' im aktuellen Zustand angehalten, während die Ausführung der Folge von Maschinenbefehlen MP im Teilsystem 2 fortgesetzt wird, solange bis auch der Synchronisationszähler SZ den Wert n+1 erreicht, wäre dennoch keine Synchronisation erreicht.

Die nächste Inkrementierungsanweisung IA, die beide Teilsysteme 2,2' gleichzeitig erreichen können, ist daher die Inkrementierungsanweisung IA, bei der sowohl der Synchronisationszähler SZ, wie auch der Synchronisationszählers SZ' den Wert n+2 annimmt. Der Wert des Synchronisationszähler SZ, SZ' den beide Teilsysteme 2,2' gemeinsam erreichen können, wird Synchronisationszähler-Zielwert SZZ genannt. Die Synchronisationsposition SP entspricht dabei der Position derjenigen Inkrementierungsanweisung IA innerhalb der Folgen von Maschinenbefehlen MP, bei der der Wert des Synchronisationszählers SZ, SZ' den Synchronisationszähler-Zielwert SZZ erreicht.

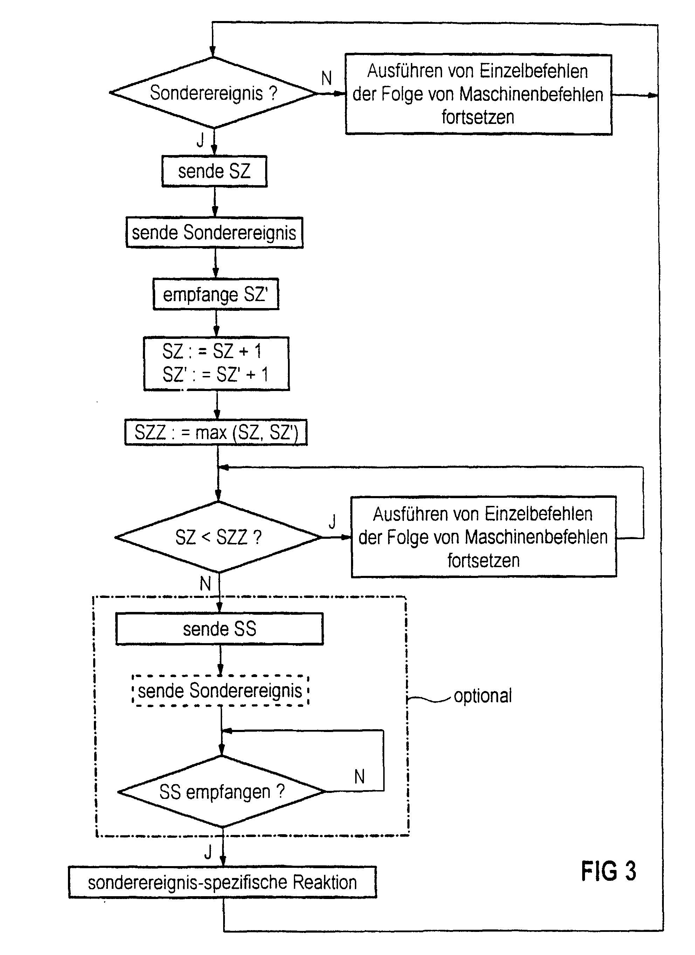

Nach Registrierung des Sonderereignisses 11 sendet das alarmierte Teilsystem 2 gemäß FIG 3 zur Ermittlung des Synchronisationszähler-Zielwertes SZZ an das mindestens eine andere Teilsystem 2' den Wert seines Synchronisationszählers SZ sowie das Sonderereignis 11. - Dies ist der frühestmögliche Zeitpunkt zur Übermittlung des Sonderereingnisses 11. Spätestens muß das Sonderereignis im Zusammenhang mit der Übermittlung des Synchronisationssignals SS übermittelt werden. - Dadurch ist das mindestens eine andere Teilsystem 2' über das Auftreten eines Sonderereignisses 11 informiert und sendet seinerseits den aktuellen Wert seines Synchronisationszählers SZ', den das alarmierte Teilsystem 2 empfängt.

Damit kennt jedes Teilsystem 2,2' den Wert des eigenen Synchronisationszählers SZ sowie den Wert des Synchronisationszählers SZ' des mindestens einen anderen Teilsystemes 2,2'. Der Synchronisationszähler-Zielwert SZZ ergibt sich aus dem Maximalwert der beiden inkrementierten Synchronisationszähler SZ, SZ'. Alternativ ist es selbstverständlich auch möglich, zunächst den Maximalwert zu ermitteln und den Synchronisationszähler-Zielwert SZZ durch inkrementieren dieses Maximalwertes zu ermitteln.

Beide Teilsysteme 2,2' setzen nach dem Austausch der Synchronisationszähler SZ, SZ' das Ausführen der Folge von Maschinenbefehlen MP fort. Sobald eines der Teilsysteme 2,2' bei der Ausführung der Folge von Maschinenbefehlen MP die Synchronisationsposition SP erreicht hat, unterbricht es das Ausführen der Folge von Maschinenbefehlen MP. Das Erreichen der Synchronisationsposition SP kann entweder durch Vergleich der Adresse des aktuell ausgeführten Befehls der Folge von Maschinenbefehlen MP mit der Adresse der Synchronisationsposition SP, oder aber - gemäß FIG 3 - durch Überwachen des Wertes des Synchronisationszählers SZ, SZ' auf das Erreichen des Synchronisationszähler-Zielwertes SZZ erkannt werden.

Jedes Teilsystem 2,2', das die Synchronisationsposition SP erreicht, signalisiert dem mindestens einen anderen Teilsystem 2,2' durch Übermitteln eines Synchronisationssignals SS das Erreichen der Synchronisationsposition SP. Das alarmierte Teilsystem 2,2' übermittelt dem mindestens einen anderen Teilsystem 2,2' das Sonderereignis 11 frühestens unmittelbar nach dem Registrieren des Sonderereignisses 11 und spätestens in Zusammenhang mit der Übermittlung des Synchronisationssignals SS.

Jedes Teilsystem 2,2' ermittelt, sobald es die Synchronisationsposition SP erreicht hat und das Synchronisationssignal SS von dem mindestens einen anderen Teilsystem 2,2' empfangen hat, eine für das Sonderereignis 11 spezifische Reaktion und führt diese aus. Nach Ausführen der für das Sonderereignis 11 spezifischen Reaktion setzen die Teilsysteme 2,2' das Ausführen der Folge von Maschinenbefehlen MP nach der Synchronisationsposition SP fort.

Wie bereits eingangs erwähnt, gibt es auch Fälle, bei denen für die Ausführung der für das Sonderereignis 11 spezifischen Reaktion das Austauschen bzw. das Warten auf das Synchronisationssignal SS nicht erforderlich ist. In einem solchen Fall wird bei Erreichen der Synchronisationsposition SP die sonderereignis-spezifische Reaktion unmittelbar ausgeführt. Es sei daher ausdrücklich darauf hingewiesen, daß in dem Flußdiagramm nach FIG 3 die Blöcke zwischen der Abfrage "SZ<SZZ?" und dem Ausführen der "sonderereignis-spezifische Reaktion" optional sind. Der optionale Abschnitt wird jedesmal dann ausgelassen, wenn keine exakte zeitliche Synchronisation erforderlich ist und es statt dessen ausreicht, daß die sonderereignis-spezifische Reaktion zwar nicht zeitgleich, aber doch an funktional identischen Positionen der Folgen von Maschinenbefehlen MP ausgeführt wird.

Gemäß einer alternativen Ausgestaltung des erfindungsgemäßen Synchronisationsverfahrens werden anstelle der Inkrementierungsanweisungen IA Dekrementierungsanweisungen IA in die Folgen von Maschinenbefehlen eingefügt. In einem solchen Fall kann - genauso wie zuvor der Synchronisationszähler SZ, SZ', ausgehend von 0, jeweils um 1 inkrementiert wird - der Synchronisationszähler SZ, SZ' ausgehend von einem Startwert, z. B. 32.767, jeweils dekrementiert werden. Das Synchronisationsverfahren läuft dabei unter Auswertung dieses nunmehr dekrementierten Synchronisationszählers SZ, SZ' in völlig analoger Weise ab.

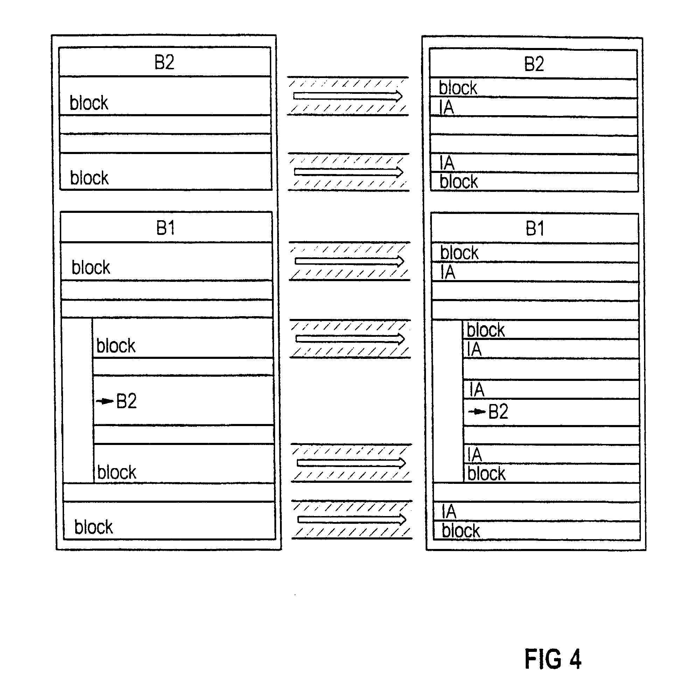

FIG 4 stellt das Einfügeverfahren der Inkrementierungsanweisungen IA am Beispiel von Befehlssequenzen einer Programmiersprache dar. Insbesondere für strukturierte Programmiersprachen hat sich eine Darstellung des Programmablaufs in einem sogenannten Struktogramm durchgesetzt. Aus diesem Struktogramm gehen insbesondere die Blockgrenzen und die damit einhergehenden Strukturierungen hervor. Auf der linken Seite ist schematisch ein einfaches Struktogramm dargestellt. Das Struktogramm besteht aus den beiden Blöcken B1 und B2, wobei der Block B1 z.B. für das sogenannte Hauptprogramm, der Block B2 dagegen exemplarisch für ein sogenanntes Unterprogramm steht.

Die Ausführung des Programms beginnt im Hauptprogramm B1. Sowohl das Hauptprogramm B1 als auch das Unterprogramm B2 bilden jeweils einen separaten Block. Sie sind deshalb in Blockbefehle eingebettet. Der Blockbefehl am Beginn des Hauptprogramms B1 bzw. des Unterprogramms B2 leitet jeweils den Block ein, der Blockbefehl am Ende des Hauptprogramms B1 bzw. des Unterprogramms B2 beendet den Block. Auch innerhalb der Anweisungen eines Blockes können weitere Blöcke auftreten, z.B. für mehrfach zu wiederholende Anweisungen, wie beispielsweise bei Schleifen. Das Unterprogramm B2 wird im Hauptprogramm B1 aus dem inneren Block aufgerufen.

FIG 4 zeigt auf der rechten Seite das sich ergebende Struktogramm mit den eingefügten Inkrementierungsanweisungen IA. Jeder Blockbefehl, der einen Block einleitet wird dabei in einen Blockbefehl, der einen Blockbefehl einleitet und eine Inkrementierungsanweisung IA transformiert; jeder Blockbefehl, der einen Block beendet, wird dabei in eine Inkrementierungsanweisung IA, und einen Blockbefehl der einen Block beendet, transformiert. Die Abfolge von Blockbefehl und Inkrementierungsanweisung IA ist nicht auf die in FIG 4 dargestellte Abfolge beschränkt und kann auch variieren. Auch die Anweisung, mit der im inneren Block des Hauptprogramms B1 das Unterprogramm B2 aufgerufen wird, wird in eine Inkrementierungsanweisung IA und eine Anweisung, mit der das Unterprogramm B2 aufgerufen wird, transformiert.

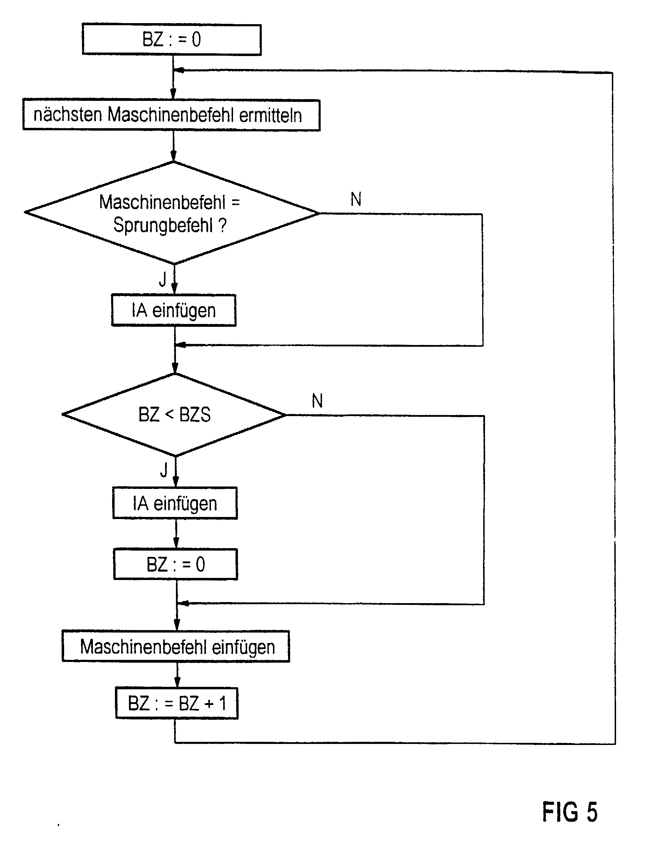

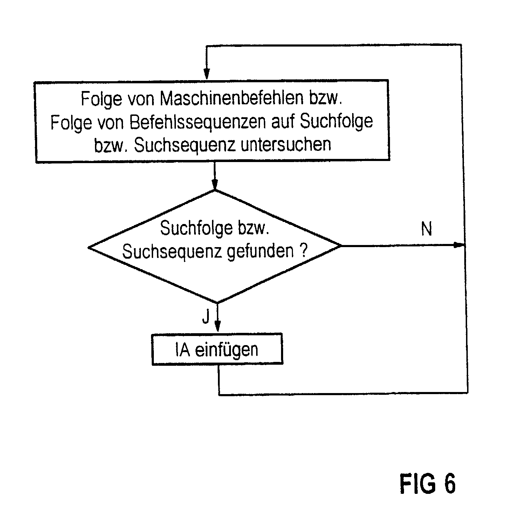

Die FIG 5 und 6 zeigen jeweils ein Flußdiagramm des Einfügeverfahrens.

FIG 5 stellt das Einfügeverfahren gemäß Anspruch 6 grafisch dar. Zunächst wird der Wert des Befehlszählers BZ initialisiert, d.h. auf Null gesetzt. Daraufhin wird der aktuell folgende Maschinenbefehl der Folge von Maschinenbefehlen MP ermittelt. Nur dann, wenn es sich bei dem Maschinenbefehl um einen Sprungbefehl handelt, wird eine Inkrementierungsanweisung IA in die Folge von Maschinenbefehlen MP eingefügt. Nur dann, wenn der Befehlszähler BZ einen Befehlszählerschwellwert BZS überschreitet, wird eine Inkrementierungsanweisung IA in die Folge von Maschinenbefehlen MP eingefügt und daraufhin der Befehlszähler BZ wieder auf Null gesetzt. Darauf wird der ermittelte Maschinenbefehl in die Folge von Maschinenbefehlen MP eingefügt. Im Anschluß an das Einfügen des Maschinenbefehls wird der Befehlszähler BZ inkrementiert, d.h. um 1 erhöht, da die Anzahl der Maschinenbefehle der Folge von Maschinenbefehlen MP jetzt genau um einen Maschinenbefehl zugenommen hat. Die Abarbeitung wird mit der Ermittlung des nächsten Maschinenbefehls fortgesetzt, solange bis sämtliche Maschinenbefehle abgearbeitet sind.

Anstelle des Befehlszähler BZ bzw. des Befehlszählerschwellwertes BZS gemäß FIG 5 kann auch ein Laufzeitzähler bzw. ein Laufzeitzähler-Schwellwert eingesetzt werden. Der Laufzeitzähler wird jeweils um die Laufzeit des eingefügten Maschinenbefehls erhöht. Der Laufzeitzähler-Schwellwert gibt die Laufzeit zwischen zwei Inkrementierungsanweisungen IA vor.

FIG 6 zeigt das Einfügeverfahren gemäß Anspruch 7, das sich auf eine Folge von Maschinenbefehlen MP bzw. auf eine Folge von Befehlssequenzen einer Programmiersprache bezieht, durch deren Interpretation ein Prozeß, insbesondere ein technischer Prozeß, gesteuert wird. Zum Einfügen von Inkrementierungsanweisungen IA wird die Folge von Maschinenbefehlen MP bzw. die Folge von Befehlssequenzen auf das Auftreten der Suchfolge bzw. der Suchsequenz untersucht. Nur dann, wenn die Suchfolge bzw. die Suchsequenz innerhalb der Folge von Maschinenbefehlen bzw. der Folge von Befehlssequenzen gefunden wurde, wird eine Inkrementierungsanweisung in diese eingefügt. Das Einfügeverfahren wird mit der Untersuchung der Folge von Maschinenbefehlen bzw. der Folge von Befehlssequenzen fortgesetzt, solange bis diese komplett untersucht sind.

Abschließend soll noch zur Bedeutung des Ausdrucks "funktional identisch" Stellung genommen werden. Funktional identische Folgen von Maschinenbefehlen entstehen z. B. als Resultat eines Kompilates von Anweisungen in verschiedenen Hochsprachen, die jedoch ein und dieselbe Aufgabe beschreiben. Weiterhin entstehen funktional identische Folgen von Maschinenbefehlen als Resultat eines Kompilates aus Anweisungen in einer Hochsprache, die jedoch von unterschiedlichen Compilern für diese Hochsprache umgesetzt wurden. Funktional identische Folgen von Maschinenbefehlen ergeben sich auch Resultat eines Kompilates von Anweisungen aus ein und derselben Hochsprache, die die gleiche Aufgabe beschreiben, die von ein und demselben Compiler, doch mit unterschiedlichen Parametern für diesen Compiler, z.B. unterschiedliche Optimierungsstufen, verarbeitet wurden.

## Patentansprüche

1. Synchronisationsverfahren für ein redundant aus mindestens zwei Teilsystemen (2, 2') aufgebautes Automatisierungssystem (1), bei dem die mindestens zwei Teilsysteme (2, 2') jeweils mindestens einen Prozessor (3) aufweisen, über Kommunikationsmittel (6) miteinander gekoppelt sind, zur Steuerung eines Prozesses funktional identische Folgen von Maschinenbefehlen (MP) ausführen und sich von Zeit zu Zeit über das Kommunikationsmittel (6) miteinander synchronisieren,
**dadurch gekennzeichnet,**
a) daß jedes der Teilsysteme (2, 2') einen Synchronisationszähler (SZ, SZ') aufweist,
b) daß die Folgen von funktional identischen Maschinenbefehlen (MP) an miteinander korrespondierenden Stellen Inkrementierungs- bzw. Dekrementierungs-Anweisungen (IA) aufweisen, mit denen der Synchronisationszähler (SZ, SZ') inkrementiert bzw. dekrementiert wird,
c) daß eine Synchronisation zumindest dann durchgeführt wird, wenn eines der Teilsysteme (2, 2'), das alarmierte Teilsystem (2, 2'), ein Sonderereignis (11) registriert,
d) wobei diese Synchronisation in folgenden Schritten abläuft:
Jedes Teilsystem (2, 2')
aa) übermittelt dem anderen Teilsystem (2, 2') den aktuellen Wert seines Synchronisationszählers (SZ, SZ'),
bb) ermittelt aus dem inkrementierten bzw. dekrementierten Wert des eigenen Synchronisationszählers (SZ, SZ') und aus dem inkrementierten bzw. dekrementierten Wert des Synchronisationszählers (SZ, SZ') des anderen Teilsystemes (2, 2') den aktuell größten bzw. kleinsten Wert, den Synchronisationszähler-Zielwert (SZZ),
cc) unterbricht die Ausführung der Folge von Maschinenbefehlen (MP) beim Erreichen einer Position innerhalb der Folge von Maschinenbefehlen (MP) - nachfolgend Synchronisationsposition (SP) genannt - bei der die Werte der jeweiligen Synchronisationszähler (SZ, SZ') den Synchronisationszähler-Zielwert (SZZ) erreichen,
dd) ermittelt eine für das Sonderereignis (11) spezifische Reaktion, führt diese aus und setzt danach die Ausführung der Folge von Maschinenbefehlen (MP) nach der Synchronisationsposition (SP) fort,
e) wobei das alarmierte Teilsystem (2, 2') dem anderen Teilsystem (2, 2') das Sonderereignis (11) frühestens unmittelbar nach dem Registrieren des Sonderereignisses (11) und spätestens in Zusammenhang mit der Ermittlung der für das Sonderereignis (11) spezifischen Reaktion übermittelt.

2. Synchronisationsverfahren nach Anspruch 1,
**dadurch gekennzeichnet,**
daß jedes Teilsystem (2, 2') nach dem Schritt cc
cc') dem anderen Teilsystem (2, 2') mit einem Synchronisationssignal (SS) das Erreichen der Synchronisationsposition (SP) signalisiert,
und den Schritt dd erst
cc") nach Erreichen der Synchronisationsposition (SP) und nach Registrieren des Synchronisationssignals (SS) vom anderen Teilsystem (2, 2')
ausführt.

3. Synchronisationsverfahren nach Anspruch 1 oder 2,
**dadurch gekennzeichnet,**
- daß jedem Maschinenbefehl der Folge von Maschinenbefehlen (MP) durch dessen Position innerhalb der Folge von Maschinenbefehlen (MP) eine eindeutige Adresse zugeordnet ist,
- daß die Adresse eines jeden Maschinenbefehls der Folge von Maschinenbefehlen (MP), insbesondere die Adresse des aktuell auszuführenden Maschinenbefehls sowie die Adresse desjenigen Maschinenbefehls, der mit der Synchronisationsposition (SP) korrespondiert, ermittelbar ist,
- daß beim Ausführen der Folge von Maschinenbefehlen (MP) - zumindest nach der Registrierung des Sonderereignisses (11) durch das alarmierte Teilsystem (2, 2') - stets die Adresse des aktuell auszuführenden Maschinenbefehls mit der Adresse desjenigen Maschinenbefehls, der mit der Synchronisationsposition (SP) korrespondiert, verglichen wird und
- daß das Ausführen der Folge von Maschinenbefehlen (MP) genau bei Erreichen der Synchronisationsposition (SP) unterbrochen wird.

4. Synchronisationsverfahren nach Anspruch 1 oder 2,
**dadurch gekennzeichnet,**
- daß beim Ausführen der Folge von Maschinenbefehlen (MP) - zumindest nach der Registrierung des Sonderereignisses (11) durch das alarmierte Teilsystem (2, 2') - stets der Wert des Synchronisationszählers (SZ, SZ') mit dem Synchronisationszähler-Zielwert (SZZ) verglichen wird und
- daß das Ausführen der Folge von Maschinenbefehlen (MP) unterbrochen wird, wenn der Wert des Synchronisationszählers (SZ, SZ') den Synchronisationszähler-Zielwert (SZZ) erreicht.

5. Synchronisationsverfahren nach Anspruch 1, 2, 3 oder 4,
**dadurch gekennzeichnet,** daß die Inkrementierungs-Anweisungen (IA) jeweils zumindest
- nach einer festen Anzahl von Einzelbefehlen der Folge von Maschinenbefehlen (MP) oder - unter Bewertung der Laufzeit einer Anzahl von Maschinenbefehlen - in bestimmten, im wesentlichen äquidistanten Laufzeitintervallen sowie
- in Zusammenhang mit jedem Sprungbefehl ausgeführt werden.

6. Synchronisationsverfahren nach einem der vorstehenden Ansprüche, **dadurch gekennzeichnet,** daß die Inkrementierungsanweisungen (IA) jeweils
- nach einer festen Anzahl von Einzelbefehlen der Folge von Maschinenbefehlen (MP) oder - unter Bewertung der Laufzeit einer Anzahl von Maschinenbefehlen - in bestimmten, im wesentlichen äquidistanten Laufzeitintervallen sowie
- in Zusammenhang mit jedem Sprungbefehl in die Folge von Maschinenbefehlen (MP) eingefügt werden.

7. Synchronisationsverfahren nach einem der vorstehenden Ansprüche, **dadurch gekennzeichnet,**
- daß die Folge von Maschinenbefehlen (MP) aus einer Folge von Befehlssequenzen einer Programmiersprache generiert wird,
- daß die Folge von Maschinenbefehlen (MP) bzw. die Folge von Befehlssequenzen auf bestimmte Maschinenbefehle bzw. bestimmte Befehlssequenzen, insbesondere auf bestimmte Teilfolgen der Folgen von Maschinenbefehlen (MP) bzw. bestimmter Teilfolgen der Befehlssequenzen - nachfolgend Suchfolge bzw. Suchsequenz genannt - untersucht wird,
- daß das Auftreten der Suchfolge bzw. der Suchsequenz erkannt wird und
- daß die Inkrementierungs-Anweisungen (IA) der Suchfolge bzw. der Suchsequenz vorangestellt oder angefügt werden.

8. Synchronisationsverfahren nach Anspruch 7,
**dadurch gekennzeichnet,**
- daß zusammengehörige Befehlssequenzen jeweils in einem Block zusammengefaßt sind und
- daß eine der Suchfolgen bzw. eine der Suchsequenzen zumindest eine der Grenzen des Blockes und/oder ein Sprungbefehl ist.

9. Synchronisationsverfahren nach Anspruch 8,
**dadurch gekennzeichnet,**
- daß die Inkrementierungs-Anweisungen (IA) während einer Generierung der Folge von Maschinenbefehlen (MP) in diese eingefügt werden,
- wobei die Generierung der Folge von Maschinenbefehlen (MP) in an sich bekannter Weise mit Hilfe eines speziellen Compilers erfolgt,
- wobei der spezielle Compiler jeweils beim Erkennen der Suchfolge bzw. der Suchsequenz die Inkrementierungs-Anweisungen (IA) generiert und in die Folgen von Maschinenbefehlen (MP) einfügt.

10. Synchronisationsverfahren nach Anspruch 8 oder 9,
**dadurch gekennzeichnet,**
- daß die Inkrementierungs-Anweisungen (IA) vor und/oder nach einer Generierung der Folge von Maschinenbefehlen (MP) in diese eingefügt werden,
- daß die Generierung der Folge von Maschinenbefehlen (MP) in an sich bekannter Weise mit Hilfe eines Standard-Compilers erfolgt,
- daß vor und/oder nach der Generierung jeweils beim Erkennen der Suchfolge bzw. der Suchsequenz die Inkrementierungs-Anweisungen (IA) in die Folge von Maschinenbefehlen (MP) bzw. die Folge von Befehlssequenzen eingefügt werden.

## Claims

1. Synchronisation method for an automation system (1) constructed redundantly from at least two subsystems (2, 2'), in which method the at least two subsystems (2, 2') each have at least one processor (3), are coupled to each other by way of communication means (6), execute functionally identical series of machine instructions (MP) for the control of a process, and synchronise with each other from time to time by way of the communication means (6), characterised
a) in that each of the subsystems (2, 2') has a synchronisation counter (SZ, SZ'),
b) in that the series of functionally identical machine instructions (MP) have at corresponding points increment or decrement statements (IA) with which the synchronisation counter (SZ, SZ') is incremented or decremented, respectively,
c) in that a synchronisation is carried out at least whenever one of the subsystems (2, 2'), the alarmed subsystem (2, 2'), registers a special event (11),
d) wherein this synchronisation takes place in the following steps:
each subsystem (2, 2')
aa) transmits to the other subsystem (2, 2') the current value of its synchronisation counter (SZ, SZ'),
bb) establishes from the incremented or decremented value of its own synchronisation counter (SZ, SZ') and from the incremented or decremented value of the synchronisation counter (SZ, SZ') of the other subsystem (2, 2') the highest or lowest value at the present time, the synchronisation-counter target value (SZZ),
cc) interrupts the execution of the series of machine instructions (MP) upon reaching a position within the series of machine instructions (MP) - called synchronisation position (SP) in the following - at which the values of the respective synchronisation counters (SZ, SZ') reach the synchronisation-counter target value (SZZ),
dd) establishes a reaction which is specific to the special event (11), carries it out and then continues the execution of the series of machine instructions (MP) after the synchronisation position (SP),
e) wherein the alarmed subsystem (2, 2') transmits the special event (11) to the other subsystem (2, 2') at the earliest immediately after the registering of the special event (11) and at the latest in connection with the establishing of the reaction which is specific to the special event (11).

2. Synchronisation method according to claim 1, characterised in that after the step cc, each subsystem (2, 2')
cc') signals to the other subsystem (2, 2') with a synchronisation signal (SS) the reaching of the synchronisation position (SP),
and does not carry out step dd until
cc") after reaching the synchronisation position (SP) and after registering the synchronisation signal (SS) of the other subsystem (2, 2').

3. Synchronisation method according to claim 1 or 2, characterised
- in that assigned to each machine instruction of the series of machine instructions (MP) as a result of its position within the series of machine instructions (MP) is a unique address,
- in that the address of each machine instruction of the series of machine instructions (MP), in particular the address of the machine instruction which is to be executed at the present time and the address of the machine instruction which corresponds to the synchronisation position (SP), can be established,
- in that during the execution of the series of machine instructions (MP) - at least after the registering of the special event (11) by the alarmed subsystem (2, 2') - the address of the machine instruction which is to be executed at the present time is always compared with the address of the machine instruction which corresponds to the synchronisation position (SP) and
- in that the execution of the series of machine instructions (MP) is interrupted precisely upon reaching the synchronisation position (SP).

4. Synchronisation method according to claim 1 or 2, characterised
- in that during the execution of the series of machine instructions (MP) - at least after the registering of the special event (11) by the alarmed subsystem (2, 2') - the value of the synchronisation counter (SZ, SZ') is always compared with the synchronisation-counter target value (SZZ), and
- in that the execution of the series of machine instructions (MP) is interrupted when the value of the synchronisation counter (SZ, SZ') reaches the synchronisation-counter target value (SZZ).

5. Synchronisation method according to claim 1, 2, 3 or 4, characterised in that the increment statements (IA) are executed in each case at least
- after a fixed number of individual instructions of the series of machine instructions (MP) or - with evaluation of the run time of a number of machine instructions - at certain, substantially equidistant run-time intervals and
- in connection with each jump instruction.

6. Synchronisation method according to one of the preceding claims, characterised in that the increment statements (IA) are inserted into the series of machine instructions (MP) in each case
- after a fixed number of individual instructions of the series of machine instructions (MP) or - with evaluation of the run time of a number of machine instructions - at certain, substantially equidistant run-time intervals and
- in connection with each jump instruction.

7. Synchronisation method according to one of the preceding claims, characterised
- in that the series of machine instructions (MP) is generated from a series of instruction sequences of a programming language,
- in that the series of machine instructions (MP) or the series of instruction sequences is checked for certain machine instructions and certain instruction sequences, respectively, in particular for certain subseries of the series of machine instructions (MP) or certain subseries of the instruction sequences - called search series and search sequence, respectively, in the following,
- in that the occurrence of the search series or search sequence is recognised, and
- in that the increment statements (IA) prefix or are added to the search series or search sequence.

8. Synchronisation method according to claim 7, characterised
- in that associated instruction sequences are put together in each case to form a block, and
- in that one of the search series or one of the search sequences is at least one of the boundaries of the block and/or a jump instruction.

9. Synchronisation method according to claim 8, characterised
- in that the increment statements (IA) are inserted into the series of machine instructions (MP) during a generation of the latter,
- wherein the generation of the series of machine instructions (MP) takes place in a manner known per se with the aid of a special compiler,
- wherein the special compiler generates, in each case upon recognition of the search series or the search sequence, the increment statements (IA) and inserts them into the series of machine instructions (MP).

10. Synchronisation method according to claim 8 or 9, characterised
- in that the increment statements (IA) are inserted into the series of machine instructions (MP) before and/or after a generation of the latter,
- in that the generation of the series of machine instructions (MP) takes place in a manner known per se with the aid of a standard compiler, and
- in that before and/or after the generation, in each case upon recognition of the search series or search sequence, the increment statements (IA) are inserted into the series of machine instructions (MP) or the series of instruction sequences.

## Revendications

1. Procédé de synchronisation pour un système d'automatisation (1) qui est construit de manière redondante à partir d'au moins deux sous-systèmes (2, 2') et dans lequel les deux, ou plus, sous-systèmes (2, 2') comportent chacun au moins un processeur (3), sont couplés entre eux par l'intermédiaire d'un moyen de communication (6), exécutent pour la commande d'un processus des suites fonctionnellement identiques d'instructions machine (MP) et se synchronisent entre eux de temps en temps par l'intermédiaire du moyen de communication (6),
caractérisé par le fait que
a) chacun des sous-systèmes (2, 2') comporte un compteur de synchronisation (SZ, SZ'),
b) les suites fonctionnellement identiques d'instructions machine (MP) comportent à des endroits qui se correspondent entre eux des instructions d'incrémentation ou de décrémentation (IA) avec lesquelles le compteur de synchronisation (SZ, SZ') est incrémenté ou décrémenté,
c) une synchronisation est effectuée au moins lorsque l'un des sous-systèmes (2, 2'), à savoir le sous-système (2, 2') alarmé, enregistre un événement spécial (11),
d) cette synchronisation s'effectuant selon les étapes suivantes :
chaque sous-système (2, 2')
aa) transmet à l'autre sous-système (2, 2') la valeur actuelle de son compteur de synchronisation (SZ, SZ'),
bb) détermine à partir de la valeur incrémentée ou décrémentée de son propre compteur de synchronisation (SZ, SZ') et à partir de la valeur incrémentée ou décrémentée du compteur de synchronisation (SZ, SZ') de l'autre sous-système (2, 2') la valeur actuellement la plus grande ou la plus petite, à savoir la valeur visée de compteur de synchronisation (SZZ),
cc) interrompt l'exécution de la suite d'instructions machine (MP) lorsqu'il atteint une position à l'intérieur de la suite d'instructions machine (MP) - appelée ci-dessous position de synchronisation (SP) - à laquelle les valeurs des compteurs de synchronisation respectifs (SZ, SZ') atteignent la valeur visée de compteur de synchronisation (SSZ),
dd) détermine une réaction spécifique à l'événement spécial (11), exécute celle-ci et poursuit ensuite l'exécution de la suite d'instructions machine (MP) après la position de synchronisation (SP),
e) le sous-système (2, 2') alarmé transmettant à l'autre sous-système (2, 2') l'événement spécial (11) au- plus tôt juste après avoir enregistré l'événement spécial (11) et au plus tard en relation avec la détermination de la réaction spécifique à l'événement spécial (11).

2. Procédé de synchronisation selon la revendication 1,
caractérisé par le fait que
chaque sous-système (2, 2'), après l'étape cc,
cc') signale avec un signal de synchronisation (SS) à l'autre sous-système (2, 2') qu'il a atteint la position de synchronisation (SP),
et exécute l'étape dd seulement
cc") après que la position de synchronisation (SP) a été atteinte et après que le signal de synchronisation (SS) a été enregistré par l'autre sous-système (2, 2').

3. Procédé de synchronisation selon la revendication 1 ou 2,
caractérisé par le fait que
- une adresse unique est associée à chaque instruction machine de la suite d'instructions machine (MP) par sa position à l'intérieur de la suite d'instructions machine (MP),
- l'adresse de chaque instruction machine de la suite d'instructions machine (MP), notamment l'adresse de l'instruction machine à exécuter actuellement ainsi que l'adresse de l'instruction machine qui correspond à la position de synchronisation (SP), peut être déterminée,
- lors de l'exécution de la suite d'instructions machine (MP) - au moins après l'enregistrement de l'événement spécial (11) par le sous-système (2, 2') alarmé -, on compare toujours l'adresse de l'instruction machine à exécuter actuellement à l'adresse de l'instruction machine qui correspond à la position de synchronisation (SP), et que
- l'on interrompt l'exécution de la suite d'instructions machine (MP) précisément au moment où la position de synchronisation (SP) est atteinte.

4. Procédé de synchronisation selon la revendication 1 ou 2,
caractérisé par le fait que
- lors de l'exécution de la suite d'instructions machine (MP) - au moins après l'enregistrement de l'événement spécial (11) par le sous-système (2, 2') alarmé -, on compare toujours la valeur du compteur de synchronisation (SZ, SZ') à la valeur visée de compteur de synchronisation (SSZ) et
- on interrompt l'exécution de la suite d'instructions machine (MP) lorsque la valeur du compteur de synchronisation (SZ, SZ') atteint la valeur visée de compteur de synchronisation (SSZ) .

5. Procédé de synchronisation selon les revendications 1, 2, 3 ou 4,
caractérisé par le fait qu'on exécute les instructions d'incrémentation (IA) à chaque fois au moins
- après un nombre fixe d'instructions individuelles de la suite d'instructions machine (MP) ou - avec une évaluation du temps d'exécution d'un certain nombre d'instructions machine - à des intervalles de temps d'exécution déterminés, globalement équidistants, ainsi que
- en relation avec chaque instruction de saut.

6. Procédé de synchronisation selon l'une des revendications précédentes,
caractérisé par le fait qu'on insère dans la suite d'instructions machine (MP) les instructions d'incrémentation (IA) à chaque fois
- après un nombre fixe d'instructions individuelles de la suite d'instructions machine (MP) ou - avec une évaluation du temps d'exécution d'un certain nombre d'instructions machine - à des intervalles de temps d'exécution déterminés, globalement équidistants, ainsi que
- en relation avec chaque instruction de saut.

7. Procédé de synchronisation selon l'une des revendications précédentes,
caractérisé par le fait que
- on génère la suite d'instructions machine (MP) à partir d'une suite de séquences d'instructions d'un langage de programmation,
- on examine la suite d'instructions machine (MP) ou la suite de séquences d'instructions pour trouver certaines instructions machine déterminées ou certaines séquences d'instructions déterminées, notamment pour trouver certaines suites partielles déterminées des suites d'instructions machine (MP) ou certaines suites partielles déterminées des séquences d'instructions, - appelées ci-dessous suite recherchée ou séquence recherchée -,
- on détecte l'apparition de la suite recherchée ou de la séquence recherchée, et que
- on met les instructions d'incrémentation (IA) avant la suite recherchée ou la séquence recherchée ou qu'on les adjoint à celles-ci.

8. Procédé de synchronisation selon la revendication 7,
caractérisé par le fait que
- on regroupe des séquences d'instructions qui vont ensemble à chaque fois dans un bloc, et que
- l'une des suites recherchées ou l'une des séquences recherchées est au moins l'une des limites du bloc et/ou une instruction de saut.

9. Procédé de synchronisation selon la revendication 8,
caractérisé par le fait que
- on insère les instructions d'incrémentation (IA), pendant une génération de la suite d'instructions machine (MP), dans celle-ci,
- la génération de la suite d'instructions machine (MP) s'effectue de manière connue en soi à l'aide d'un compilateur spécial,
- le compilateur spécial génère à chaque fois lors de la détection de la suite recherchée ou de la séquence recherchée les instructions d'incrémentation (IA) et les insère dans les suites d'instructions machine (MP).

10. Procédé de synchronisation selon la revendication 8 ou 9,
caractérisé par le fait que
- on insère les instructions d'incrémentation (IA), avant et/ou après une génération de la suite d'instructions machine (MP), dans celle-ci,
- la génération de la suite d'instructions machine (MP) s'effectue de manière connue en soi à l'aide d'un compilateur standard,
- avant et/ou après la génération, on insère à chaque fois lors de la détection de la suite recherchée ou de la séquence recherchée les instructions d'incrémentation (IA) dans la suite d'instructions machine (MP) ou dans la suite de séquences d'instructions.
